# EUROPEAN PATENT APPLICATION

(11) **EP 1 380 860 A1**
(43) Date of publication of application: **14.01.2004**
(21) Application number: 03077033.3
(22) Date of filing: 30.06.2003
(51) Int. Cl.: G02B 5/30, G02F 1/13363, B29D 11/00

(54) **Process for forming an Optical Compensator Film**

(30) Priority: 12.07.2002 US 195094
(71) Applicant: EASTMAN KODAK COMPANY, Rochester, New York 14650 (US)
(72) Inventor: Castle, Richard A., c/o Eastman Kodak Company, Rochester, New York 14650-2201 (US); Elman, James F., c/o Eastman Kodak Company, Rochester, New York 14650-2201 (US); Hoff, Joseph W., c/o Eastman Kodak Company, Rochester, New York 14650-2201 (US); Payne, Jason A., c/o Eastman Kodak Company, Rochester, New York 14650-2201 (US)
(74) Representative: Haile, Helen Cynthia

(57) **Abstract**

Disclosed is an optical compensator film for a liquid crystal display and a process for forming the film comprising the steps of (1) coating an anisotropic layer containing liquid crystal prepolymer materials and an organic solvent system that is both miscible with said materials and has a weight average boiling point of from 85 to 130°C and subsequently (2) drying the layer. The compensator widens the viewing angle characteristics of liquid crystal displays and is readily manufactured with improved quality and uniformity of coated layers.

## Description

This invention relates to an optical compensator film for liquid crystal displays and a process for making such a compensator film using a particular type of organic solvent to coat an optical anisotropic layer.

Current rapid expansion in the liquid crystal display (LCD) applications in various areas of information display is largely due to improvements of display qualities. Contrast, color reproduction, and stable gray scale intensities are important quality attributes for electronic displays, which employ liquid crystal technology. The primary factor limiting the contrast of a liquid crystal display is the propensity for light to "leak" through liquid crystal elements or cell, which are in the dark or "black" pixel state. Furthermore, the leakage and hence contrast of a liquid crystal display are also dependent on the angle from which the display screen is viewed. Typically the optimum contrast is observed only within a narrow viewing angle centered about the normal incidence to the display and falls off rapidly as the viewing angle is increased. In color displays, the leakage problem not only degrades the contrast but also causes color or hue shifts with an associated degradation of color reproduction. In addition to black-state light leakage, the narrow viewing angle problem in typical twisted nematic liquid crystal displays is exacerbated by a shift in the brightness-voltage curve as a function of viewing angle because of the optical anisotropy of the liquid crystal material.

Thus, one of the major factors measuring the quality of such displays is the viewing angle characteristic, which describes a change in contrast ratio from different viewing angles. It is desirable to be able to see the same image from a wide variation in viewing angles and this ability has been a shortcoming with liquid crystal display devices. One way to improve the viewing angle characteristic is to insert a compensator (also referred as compensation film, retardation film, or retarder) with proper optical properties between the polarizer and liquid crystal cell. Various liquid crystal display technologies have been disclosed in U.S. Patents 4,701,028 (Clerc *et al*.); 5,410,422 (Bos); 5,583,679 (Ito *et al*.), 5,853,801 (Suga *et al*.), 5,619,352 (Koch *et al*.), 5,978,055 (Van De Witte *et al*.), and 6,160,597 (Schadt *et al*.). A compensation film according to U.S. Patents 5,583,679 (Ito *et al*.) and 5,853,801 (Suga *et al*.), based on discotic liquid crystals which have negative birefringence, is widely used. It offers improved contrast over wider viewing angles, however, it suffers larger color shift for gray level images, compared to a compensator made of liquid crystalline materials with positive birefringence, according to Satoh et al. ("Comparison of nematic hybrid and discotic hybrid films as viewing angle compensator for NW-TN-LCDs", SID 2000 Digest, pp. 347-349, (2000)). To achieve comparable performance in the contrast ratio while reducing color shift, one alternative is to use a pair of crossed liquid crystal polymer films (LCP) on each side of liquid crystal cell, as discussed by Chen et al. ("Wide Viewing Angle Photoaligned Plastic Films", SID 99 Digest, pp.98-101 (1999)). This paper states that "since the second LPP/LCP retarder film is coated directly on top of the first LCP retarder film, the total thickness of the final wide-view retarder stack is only a few microns thin". Although they provide very compact optical component, one of the challenges of this method is to make two LCP layers crossed, particularly in a continuous roll to roll manufacturing process.

The films are conveniently prepared by coating on the support a photo-alignable prepolymer (LPP) orientation layer and then an anisotropic liquid crystal prepolymer (LCP) layer from organic solvents onto a transparent plastic base. Coating imperfections described as mottle, drying convection cells, and/or repellencies are apparent within the LCP retarder film when coated from organic solvents. The uncured retarder film is in a tacky state and susceptible to nonuniform surface thickness caused by air flow or movement disturbances.

It is a problem to be solved to provide an optical compensator that widens the viewing angle characteristics of liquid crystal displays, in particular Twisted Nematic (TN), Super Twisted Nematic (STN), Optically Compensated Bend (OCB), In Plane Switching (IPS), or Vertically Aligned (VA) liquid crystal displays, and is readily manufactured with improved quality and uniformity of coated layers.

The invention provides a process for forming an optical compensator film for a liquid crystal display device comprising the steps of (1) coating an anisotropic layer containing liquid crystal prepolymer materials and an organic solvent system that is both miscible with said materials and has a weight average boiling point of from 85 to 130°C and subsequently (2) drying the layer as well as a compensator film made by the process.

Typically, the invention provides a compensator film for a liquid crystal display comprising a substrate, an orientation layer, and an anisotropic layer and a process for making such compensators. The usual steps include (1) providing an orientation layer on a substrate (2) coating an optical anisotropic layer from organic solvents (3) drying and curing the optical anisotropic layer. The coating composition to apply the optical anisotropic layer should consist of a solvent mixture of organic solvents that is both miscible with the optical anisotropic materials and has a weight-averaged boiling point of 85C to 130C.

The compensator film widens the viewing angle characteristics of liquid crystal displays, and in particular of Twisted Nematic (TN), Super Twisted Nematic (STN), Optically Compensated Bend (OCB), In Plane Switching (IPS), or Vertically Aligned (VA) liquid crystal displays and is readily manufactured.

FIG. 1 is a cross-sectional schematic view of a compensator prepared by the process of the present invention.

FIGS. 2A and 2B are cross-sectional schematic views of various embodiments prepared by the process of the present invention.

FIG. 3 is a schematic concept in accordance with the present invention.

FIG. 4 shows a liquid crystal display in combination with a compensator prepared according to the present invention.

FIG. 5 shows a roll-to-roll process for making a compensator according to the present invention.

The current invention regarding the optical compensator for liquid crystal displays is described by referring to the figures as follows.

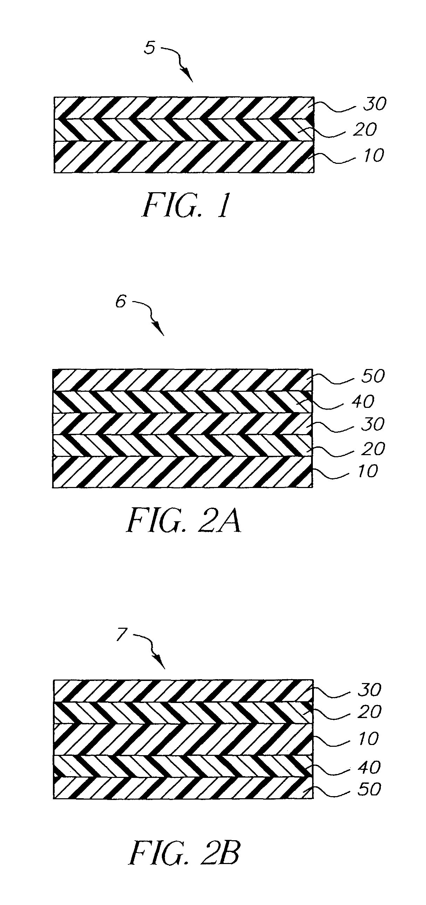

FIG. 1 shows a cross-sectional schematic view of an optical compensator **5** according to the present invention. This compensator comprises a substrate **10** of transparent material, such as glass or polymer. It should be understood that to be called as a substrate, a layer must be solid and mechanically strong so that it can stand alone and support other layers. A typical substrate is made of triacetate cellulose (TAC), polyester, polycarbonate, polysulfone, polyethersulfone, or other transparent polymers, and has a thickness of 25 to 500 micrometers. Substrate **10** typically has low in-plane retardation, preferably less than 10 nm, and more preferably less than 5 nm. In some other cases, the substrate **10** may have larger in-plane retardation between 15 to 150 nm. Typically, when the substrate **10** is made of triacetyl cellulose, it has out-of-plane retardation around -40 nm to -120 nm. This is a desired property when the compensator is designed to compensate a liquid crystal state with an ON voltage applied. The in-plane retardation discussed above is defined as the absolute value of (nx-ny)d and the out-of-plane retardation discussed above is defined as [nz-(nx+ny)/2 - nz]d, respectively. The refractive indices nx and ny are along the slow and fast axes in plane of the substrate, respectively, nz is the refractive index along the substrate thickness direction (Z-axis), and d is the substrate thickness. The substrate is preferably in the form of a continuous (rolled) film or web.

On the substrate **10**, an orientation layer **20** is applied, and an anisotropic layer **30** is disposed on top of layer **20.**

The orientation layer 20 can be oriented by various techniques. In one example, the orientation layer contains a rubbing-orientable material such as a polyimide or polyvinyl alcohol and can be oriented by a rubbing technique. In another example, the orientation layer contains a shear-orientable material and can be oriented by a shear-alignment technique. In another example, the orientation layer contains an electrically- or magnetically -orientable material and can be oriented by an electrical- or magnetic-alignment technique. In another example, the orientation layer can also be a layer of SiOx fabricated by oblique deposition. In another example, the orientation layer contains a photo-orientable material and can be oriented by a photo-alignment technique. Photo-orientable materials include, for example, photo isomerization polymers, photo dimerization polymers, and photo decomposition polymers. In a preferred embodiment, the photo-orientable materials are cinnamic acid derivatives as disclosed in U.S. Patent 6,160,597. Such materials may be oriented and simultaneously crosslinked by selective irradiation with linear polarized UV light.

The anisotropic layer **30** is typically a liquid crystalline monomer when it is first disposed on the orientation layer **20**, and is cross-linked by a further UV irradiation, or polymerized by other means such as heat. In a preferred embodiment, the anisotropic layer contains a material such as a diacrylate or diepoxide with positive birefringence as disclosed in U.S. Patent 6,160,597 (Schadt *et al*.) and U.S. Patent 5,602,661 (Schadt *et al*.). In another embodiment, the anisotropic layer contains a material with negative birefringence, such as a discotic liquid crystal disclosed in U.S. Patents 5,583,679 (Ito *et al*.). The optic axis in the anisotropic layer **30** is usually tilted relative to the layer plane, and varies across the thickness direction.

The anisotropic layer 30 in accordance with the present invention is applied from a liquid medium containing an organic solvent mixture that is both miscible with the liquid crystal monomer and has an average boiling point of 85C to 130C. The average boiling point is defined as the weighted average boiling point of the solvents contained in the mixture. For organic mixtures having average boiling points of less than 85C the resulting optical ansiotropic layer is highly prone to the formation of coating defects that include mottle, drying convection cells, repellencies, etc. For organic solvent mixtures having boiling points of about greater than 130C excessive drying times are required. Preferably the organic solvent mixtures have average boiling points of 85C to 120C, and more preferably 85C to 110C. The liquid crystal polymer layer may be applied using conventional coating techniques at wet coverages of between 5 to 100 cc/m², preferably between 10 and 50 cc/m². Dry coating weight of the optical ansiotropic layer may range from 100 to 10,000 mg/m², preferably range from 250 to 2000 mg/m².

The organic solvent mixture for coating the ansiotropic layer of the invention includes mixtures of, but is not limited to, the following: ketones, i.e. methyl ethyl ketone, methyl propyl ketone, acetone, etc.; acetates, i.e. ethyl, methyl, or butyl acetate, methyl acetoacetate, etc.; alcohols, i.e. ethyl, methyl, or butyl alcohol, etc.; toluene, chlorobenzene, g-butyrolactone, and other organic solvents commonly used in the coating industry. Mixtures containing toluene are particularly preferred. Preferred mixtures containing toluene include, for example, mixtures of: (1) methyl ethyl ketone, toluene, and ethyl acetate, (2) methyl ethyl ketone, toluene, and propyl acetate, or (3) methyl ethyl ketone and toluene.

The anisotropic layer may also contain addenda such as surfactants, light stabilizers and UV initiators. Surfactants useful in the layer include, but are not limited to: fluorinated surfactants including polymeric fluorochemicals such as fluoro(meth)acrylate polymers; fluorotelomers such as those having the structure R_{f}CH₂CH₂OOC-C₁₇H₃₅ or (R_{f}CH₂CH₂OOC)₃C₃H₅O, wherein R_{f} is CF₃CF₂(CF₂CF₂)_{x=2 to 4}, ethoxylated nonionic fluorochemicals such as those having the general structure R_{f}CH₂CH₂O(CH₂CH₂O)_{y}H, wherein R_{f} is CF₃CF₂(CF₂CF₂)_{x=2 to 4}, and fluorosilcones; silicone surfactants such as polysiloxanes; polyoxyethylene-lauryl ether surfactants; sorbitan laurate; palmitate; and stearates.

Preferred surfactants for use in the present invention are fluorinated surfactants. Such surfactants are preferred due to their effectiveness at very low concentrations and their chemical and thermal stabilities. Particularly preferred fluorinated surfactants are polymeric fluorochemicals, such as fluoro(meth)acrylates, and ethoxylated nonionic fluorochemicals. Non-limiting commercially-available examples of fluoro(meth)acrylates include Zonyl FSG (DuPont) and Modiper F-2020 (NOF Corporation). Non-limiting commercially-available examples of ethoxylated nonionic fluorochemicals include Zonyl FSN and Zonyl FSO (DuPont).

UV initiatiors useful in the layer include, but are not limited to, materials such as benzophenone and acetophenone and their derivatives; benzoin, benzoin ethers, benzil, benzil ketals, fluorenone, xanthanone, alpha and beta naphthyl carbonyl compounds and ketones. Preferred initiators are alpha-hydroxyketones.

The anisotropic layer may also contain a polymeric additive to increase the viscosity of the coating solution used to apply the layer.

While this type of compensator described above provides some desired optical properties, it is not sufficient in many applications, for example, as a compensator for Twisted Nematic (TN) Liquid Crystal Displays (LCDs).

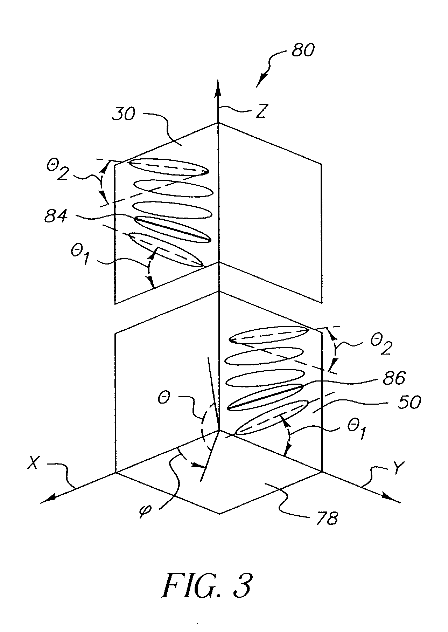

FIG. 2A illustrates a more sophisticated optical compensator **6** of the invention that contains a second orientation layer **40** and a second anisotropic layer **50** on top of the first anisotropic layer **30**. The second orientation layer **40** and the second anisotropic layer **50** are made essentially in the same way as the first orientation layer **20** and the first anisotropic layer **30** are made, except that the direction of the orientation may vary. For the purpose of illustration, refer to an XYZ coordinate system **80** as shown in FIG. 3. The X and Y axes are parallel to the plane of substrate **78**, and the Z-axis is perpendicular to the plane of substrate **78**. The angle ϕ is measured from the X-axis in the XY plane, and referred as an azimuthal angle. The angle θ is measured from the XY plane, and referred as a tilt angle.

It should be understood that the optic axis in each of the anisotropic layers **30** and **50** can have a variable tilt angle and/or variable azimuthal angle. For example, the optic axis **84** in the anisotropic layer **30** has a variable tilt angle θ across the Z-axis ranging from θ₁ to θ₂. In another example, the optic axis **84** has a fixed tilt angle *θ* across the Z-axis, namely, θ₁ = θ₂. In another example, the optic axis **84** is contained in one plane such as the XZ plane and consequently has a fixed azimuthal angle ϕ across the Z-axis. In another example, although the anisotropic layer **30** is still oriented along the preferred direction forced by the orientation layer at their interface, the optic axis **84** has a variable azimuthal angle ϕ across the Z-axis. The azimuthal angle of the optic axis **84** can be varied by adding a proper amount of chiral dopant into the anisotropic layer **30**. In another example, the optic axis **84** has a variable tilt angle θ and a variable azimuthal angle ϕ across the Z-axis. Like the optic axis **84** of the anisotropic layer **30**, the optic axis **86** of the anisotropic layer **50** can also have a fixed tilt angle, a variable tilt angle, a fixed azimuthal angle, a variable azimuthal angle, or a variable tilt angle and a variable azimuthal angle across the Z-axis. The anisotropic layers **30** and **50** typically have different optic axis. Preferably the anisotropic layer **30** is positioned orthogonally relative to the respective optic axis of the anisotropic layer **50** about an axis perpendicular to the plane of the substrate. Even though the optic axis of the anisotropic layer **30** is preferred to be orthogonal (or ±90 degrees) relative to the respective (or counterpart) optic axis of the anisotropic layer **50** about an axis perpendicular to the plane of the substrate, it should be understood that the angle between the optic axis of the two anisotropic layers can be in a range of 85 to 95 degrees to be considered as orthogonal.

For the manufacture of more complex layer structures than that illustrated in FIG. 2A, additional orientation and anisotropic layers can be applied in further steps.

FIG. 2B illustrates another optical compensator **7** of the invention in which the second orientation layer **40** and the second anisotropic layer **50** are on the opposite side of the substrate from the first orientation layer **20** and the first anisotropic layer **30**.

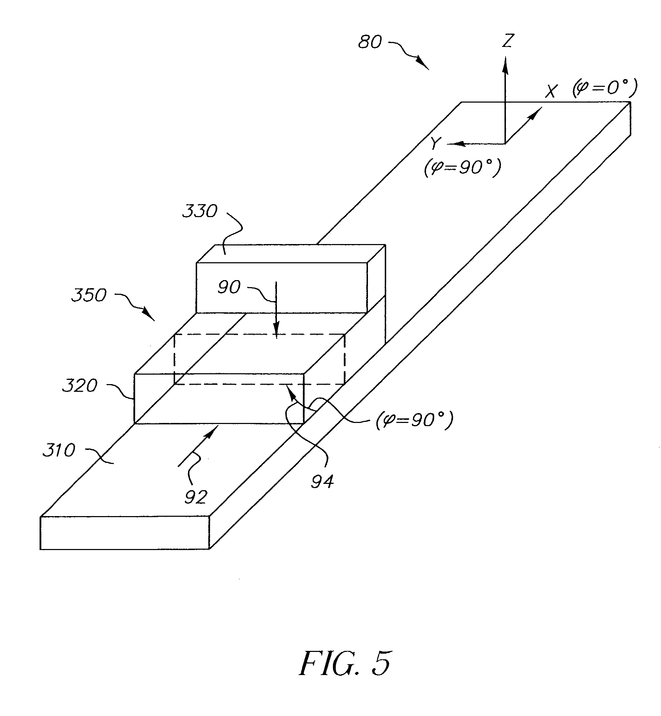

**FIG. 5** shows another aspect of the present invention. A compensator **350** can be manufactured on a continuous roll-to-roll basis as shown in FIG. 5 which shows part of a schematic view of the process. The roll-to-roll process of forming a compensator **350** comprises the steps of applying a photo-alignable orientation layer **320**, for example by coating by any known method such as extrusion hopper coating, roll-coating, slide hopper coating, or curtain coating, the orientable material in a solvent, onto a moving substrate **310**, drying the orientation layer **320**, photo-aligning (orienting) the orientation layer **320** in a predetermined alignment direction ϕ **94**, (for the purpose of illustration ϕ =90°) relative to the roll moving direction **92**, coating (as described earlier) an anisotropic layer **330** comprising a polymerizable material in a solvent carrier onto the orientation layer **320**, drying the anisotropic layer **330**, polymerizing the anisotropic layer **330** to form a continuous web of compensator. Note that for clarity, FIG. 5 only shows part of the orientation layer **320** and anisotropic layer **330**.

In one embodiment, the orientation layer is oriented by rubbing the orientation layer in a direction **94** of 90 degrees (ϕ=90°) relative to the roll moving direction **92**. In another embodiment, the orientation layer is oriented by a photo-alignment technique, for example, the orientation layer is exposed to a linearly polarized ultraviolet (UV) light indicated by **90**. It may or may not be collimated, however, the projection (pointing along **94**) of the principal ray of the light **90** onto the roll makes an angle of 90 degrees relative to the roll moving direction.

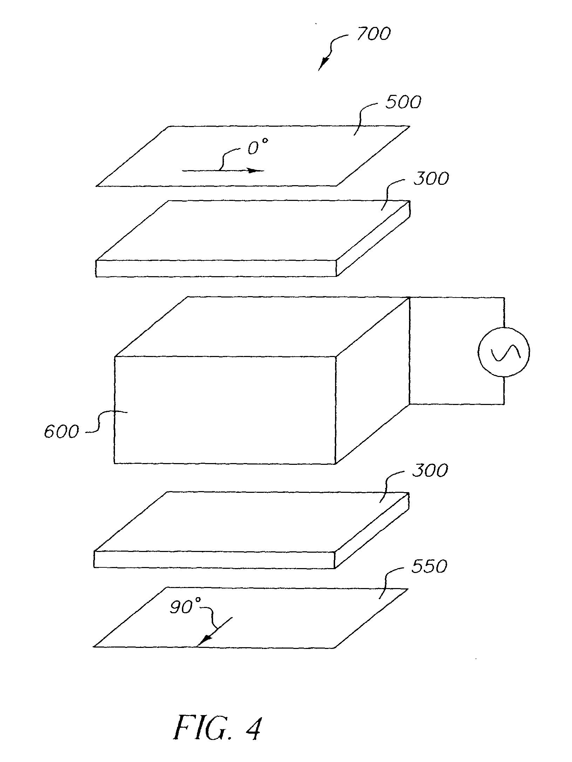

FIG. 4 is a schematic view of a liquid crystal display **700** comprising the compensator **300** in accordance with the present invention. In FIG. 4B, one compensator **300** is placed between the first polarizer **500** and the liquid crystal cell **600**, and another compensator **300** is placed between a second polarizer **550** and the liquid crystal cell **600**. The liquid crystal cell **600** is preferred to be operated in a Twisted Nematic (TN), Super Twisted Nematic (STN), Optically Compensated Bend (OCB), In Plane Switching (IPS), or Vertically Aligned (VA) mode. The polarizers **550** and **500** can be arranged crossed or parallel depending on the operation principles of the liquid crystal cell. The orientation layer in the compensator can be arranged parallel, perpendicular, or at a predetermined angle relative to the first polarizer **500**. The liquid crystal cell can also be operated in a reflective mode, in which it may only require one polarizer.

The invention may be used in conjunction with electronic imaging device comprising a liquid crystal display device. The energy required to achieve this control is generally much less than that required for the luminescent materials used in other display types such as cathode ray tubes. Accordingly, liquid crystal technology is used for a number of applications, including but not limited to digital watches, calculators, portable computers, electronic games for which light weight, low power consumption and long operating life are important features.

The present invention is illustrated in more detail by the following non-limiting examples.

On a cellulose triacetate support, an orientation layer was prepared by coating a solution containing a mixture of VANTICO Staralign 2110 and Staralign 2100 photo-aligning vinyl cinnamate polymers (0.5% solids in a mixture of MEK, cyclohexanone, and n-propyl acetate). The coating was dried at 80°C for 3 min. and then exposed to 308 nm polarized light (15-30 mJ/cm²) at an inclination of 20 degrees away from normal angle of incidence to obtain a photo-aligned orientation layer. Typically this will produce a layer thickness between 30-100 nm as measured by ellipsometry (J. A. Woollam ellipsometer, Model M2000V).

Onto the orientation layer a coating composition for an optical ansiotropic layer containing a crosslinkable diacrylate nematic liquid crystalline mixture (5 wt%) (obtained by diluting 30 wt% stock solution of VANTICO LCP 483) in organic solvent was applied. The sample was then heated at a temperature of 55 °C for 3 minutes to orient the nematic liquid crystalline layer and remove solvent. The sample was cooled to room temperature and the anisotropic layer fixed by exposing to 365 nm light (300-1000 mJ/cm²) under an atmosphere of nitrogen. In the following examples various solvent mixtures having different average boiling points were used in the optical ansiotropic layer coating composition. The weighted average boiling point is equal to the sum of the product of the boiling point of each solvent times the weight fraction of that solvent in the formulation. For each example, a visual rating was obtained for the dried ansiotropic layer. The rating considered all obvious imperfections, including mottle, drying convection cells, and repellencies. A rating of 1 would be a poorest possible quality and a rating of 10 the best possible quality.

In the following examples, various organic solvent mixtures containing methyl ethyl ketone (B.P.= 80C), methyl propyl ketone (B.P.=105C), methyl isobutyl ketone (B.P.=118C), toluene (B.P. = 111C), n-propyl acetate (B.P.=102C), and ethyl acetate (B.P. =78C) were used in the optical ansiotropic layer. The composition of the coating and the results obtained are shown in Table 1.

**Table 1**

| **Sample/ wt%** | **Type** | **% MEK 80C** | **% MPK 105C** | **% MIBK 118C** | **% Toluene 111C** | **% n-propyl acetate 102C** | **% ethyl acetate 78C** | **Wt Avg. B.P. (C)** | **Rating** |
|---|---|---|---|---|---|---|---|---|---|
| **Control** | **C** | **100** | | | | | | **80** | **2** |
| **Ex. 1C** | **C** | **29** | | | | | **71** | **79** | **4** |
| **Ex. 2C** | **C** | **71** | | | | | **29** | **79** | **4** |
| | | | | | | | | | |
| **Ex. 1** | **I** | **29** | **71** | | | | | **98** | **4** |
| **Ex. 2** | **I** | **29** | | | **71** | | | **102** | **6** |
| **Ex. 3** | **I** | **29** | | | | **71** | | **96** | **5** |
| **Ex. 4** | **I** | **29** | | **29** | | **42** | | **100** | **4** |
| **Ex. 5** | **I** | **58** | | | | **42** | | **89** | **6** |
| **Ex. 6** | **I** | **29** | | | **29** | **42** | | **98** | **6** |
| **Ex. 7** | **I** | **29** | | | | **42** | **29** | **89** | **4** |
| **Ex. 8** | **I** | **29** | | **42** | | | **29** | **95** | **6** |
| **Ex. 9** | **I** | **29** | | | **42** | | **29** | **92** | **6** |
| **Ex. 10** | **I** | **29** | | | **52** | | **19** | **96** | **7** |
| **Ex. 11** | **I** | **29** | | | **62** | | **9** | **99** | **9** |
| **Ex. 12** | **I** | **29** | | | **22** | | **49** | **86** | **4** |
| **Ex. 13** | **I** | **29** | | | **34** | | **37** | **90** | **7** |

The examples show a significant improvement in overall coating quality compared to the comparisons. When the weight averaged solvent boiling point was from 85 to 130°C, the resulting observed imperfections, including mottle, drying convection cells, and repellencies were substantially reduced. Values of 2-4 were obtained for the comparisons. While some of the inventive examples were also rated a 4, the average is nearly 6. It further appears that the higher boiling materials generally provide better results (Compare Examples 7, 8, and 9 and examples 1, 2, and 3.) The present invention may be used in conjunction with any of the optical compensator systems illustrated herein.

Embodiments of the invention include those wherein:
the orientation layer contains a photo-alignable material such as a polyvinylcinnamate;
the compensator is supported by a transparent polymeric material;
the average boiling point of the solvent system for the anisotropic layer is from 85 to 120°C,;
the wet coating weight of the layer containing liquid crystal prepolymer materials and an organic solvent system is from 10 to 50 cc/m²;
the dry coating weight of the layer containing liquid crystal prepolymer materials is from 250 to 2,000 mg/m²;
the liquid crystal prepolymer materials include a crosslinkable material such as a diacrylate;
the layer is subjected to UV initiated crosslinking after drying;
the anisotropic layer is applied as part of a roll-to-roll coating, slide hopper coating or curtain coating process.

**The entire contents of the patents and other publications referred to in this specification are incorporated herein by reference.**

## Claims

1. A process for forming an optical compensator film for a liquid crystal display device comprising the steps of (1) coating an anisotropic layer containing liquid crystal prepolymer materials and an organic solvent system that is both miscible with said materials and has a weight average boiling point of from 85 to 130°C and subsequently (2) drying the layer.

2. The process of claim 1 including the step of coating the liquid crystal prepolymer layer onto an orientation layer.

3. The process of claim 1 wherein the average boiling point of the solvent system is from 85 to 110°C.

4. The process of claim 1 wherein the solvent system comprises at least two organic solvents.

5. The process of claim 1 wherein the solvent system comprises at least three organic solvents.

6. The process of claim 1 wherein the wet coating weight of the layer containing liquid crystal prepolymer materials and an organic solvent system is from 5 to 100 cc/m².

7. The process of claim 1 wherein the dry coating weight of the layer containing liquid crystal prepolymer materials is from 100 to 10,000 mg/m².

8. The process of claim 1 wherein the solvent system comprises at least one solvent selected from the group consisting of ketones, acetates, alcohols, and aromatic hydrocarbons.

9. The process of claim 1 wherein the solvent system comprises toluene.

10. The process of claim 1 wherein the solvent system comprises methyl ethyl ketone, methyl propyl ketone, acetone, ethyl, methyl, or butyl acetate, methyl acetoacetate, ethyl, methyl, or butyl alcohol, toluene, chlorobenzene, or γ-butyrolactone.

11. The process of claim 1 wherein the solvent system comprises (1) methyl ethyl ketone, toluene, and ethyl acetate, (2) methyl ethyl ketone, toluene, and propyl acetate, or (3) methyl ethyl ketone and toluene.

12. The process of claim 1 wherein the liquid crystal prepolymer materials are nematic materials.

13. A process for making an optical compensator, comprising the steps of:
a) coating an orientation layer comprising a photo-alignable polymer in a solvent over a transparent support;
b) drying the orientation layer;
c) photo-aligning the orientation layer in a predetermined direction;
d) coating an anisotropic liquid crystal layer as described in claim 1;
e) drying the anisotropic layer ;
f) polymerizing the anisotropic layer
g) repeating steps a) through f) coating over the polymerized anisotoropic layer of f) but photo-aligning the orientation layer at a predetermined angle to the direction in step c).
